# EUROPEAN PATENT APPLICATION

(11) **EP 1 167 781 A1**
(43) Date of publication of application: **02.01.2002**
(21) Application number: 01114107.4
(22) Date of filing: 09.06.2001
(51) Int. Cl.: F16B 25/00

(54) **Thread forming screw**

(30) Priority: 28.06.2000 DE 10031344
(71) Applicant: ITW Automotive Products GmbH & Co. KG, 58636 Iserlohn (DE)
(72) Inventor: Isenberg, Rainer, 58642 Iserlohn (DE)
(74) Representative: Graalfs, Edo, Dipl.-Ing. Patentanwälte Hauck, Graalfs, Wehnert, Döring, Siemons

(57) **Abstract**

A screw (10) comprising a screw head (12) and a screw shank (14) provided with a first screw thread (20) having a thread root and a major diameter, said first screw thread being adapted for forming a thread, in particular into plastics, soft metals and the like, wherein the screw shank (14) is provided with a second thread (24) having a major diameter, said second thread (24) extends along at least one axial portion of said screw shank (14) in said thread root of said first thread (20), and that said major diameter of said second screw thread (24) is smaller than said major diameter of said first screw thread (20).

## Description

The invention relates to a screw with a screw head and a screw shaft, which is provided with a first thread-forming threading, particularly for plastics, soft metals, and the like.

A thread-forming screw, the sides of the threading of which bend off from a bending point diameter to the base of the threading in a diverging manner, was made known by DE 42 06 884 A1. The thread-forming screw is provided, in the base of the threading, with a bordering which essentially proceeds in the axial direction. Such a screw makes possible a slight rotation, and provides for a satisfactory holding of the screw in the material.

The task which forms the basis of the invention is that of creating a thread-forming screw which is suitable for plastics, soft metals, and the like, and which provides for a secure in the material in the tensed condition.

This task is solved, in accordance with the invention, by means of a screw with the characteristics in accordance with claim 1.

The screw in accordance with the invention has, in at least one longitudinal section, an additional second threading which is positioned in the base of the threading of the first threading. The external diameter of the second threading is thereby smaller than the external diameter of the first threading. The second threading is different from the first threading. During the rotating in of the screw, the first threading essentially forms a threading in the material, If the screw is rotated into the material, and if the head of the screw is placed on the material, then a prestressing is brought into the connection during an additional rotation of the screw. The prestressing is increased by increasing the torque, whereby the material is drawn into the direction of the screw shaft. Here, the second threading engages with the material and leads to a gripping of the second threading in the material. The screw is particularly well secured against a loosening by means of this gripping.

In one particularly advantageous configuration of the thread-forming first threading, this screw thread has an angle of 25° to 65°, preferably from 30° to 60°. Such a screw threading angle makes an easy screwing in of the screw possible, particularly in plastics, soft metals, and other materials.

In one advantageous further development of the invention, the ratio of the diameter of the body to the external diameter of the first threading is 3 : 4. The diameter in the base of the threading of the second threading is hereby considered to be the diameter of the body. The threading depth of the first threading which is thus formed confers upon the screw a good hold in the material.

The first threading suitably has a gradient which has a ratio of essentially 1 : 2 relative to the diameter of the body. Such a first threading can be rotated into the material with only a few rotations.

In one particularly preferred configuration, several threading spirals of the second threading are positioned in the base of the threading of the first threading.

In one particularly preferred configuration, the gradient of the second threading to the external diameter of the first threading has a ratio of approximately 1 : 10. The value of the external diameter of the first threading (the first place after the decimal of the external diameter) is preferably hereby rounded off. For example, in place of 4.2 mm, the value of 4.0 mm forms the basis for the determination of the gradient of the second threading.

In one further development, the first threading is configured as a right-oriented threading and the second threading is configured as a left-oriented or right-oriented threading. As an alternative to this, the first threading can also be configured as a left-oriented threading, and the second threading can be configured as a right-oriented or a left-oriented threading. Depending on the material that is used, a particularly good gripping can be brought about through the suitable combination of the threading orientations relative to one another.

The task in accordance with the invention is likewise solved by means of a fastening device in accordance with claim 9. The fastening device has a screw in accordance with the invention as well as an opposing part which is provided with a penetrating opening for the screw, and can be bent, in the area of the penetrating opening, in the axial direction of the screw. In the fastening device in accordance with the invention, the screw, in the rotated-in condition, deforms the opposing part in the axial direction, so that the opposing part is gripped in the threading of screw.

The opposing part of the fastening device preferably has at least one tongue unit which can be bent out of the plane of the opposing part, and which is applied to the screw inserted through the opening with its free end. It is advantageous, in this configuration of the opposing part, that the tongue unit can easily be bent, and is drawn to the body of the screw with great force.

The opposing part suitably has two tongue units positioned opposite to one another. The tongue units positioned opposite to one another are, corresponding to the pitch of the first threading, drawn to the screw body at different angles in relation to the shaft of the screw.

For a better application of the tongue unit to the second threading, the free ends of the tongue unit can each be provided with a recess in the center.

In one likewise advantageous configuration of the fastening device, the opposing part has a hemispherical depression in the area of the penetrating opening. Similar to the configuration of the tongue unit that has already been described, the edge of the opposing part is drawn to the body of the threading in a hemispherical depression.

The depression is suitably divided into individual segments by means of radial slots. Thus. the force that is necessary for the bending is less, and an application of the individual segments which is adjusted to the gradient of the first threading is brought about.

The opposing part suitably consists of sheet metal.

One advantageous example of implementation of the screw in accordance with the invention will be illustrated in further detail by means of the following figures. These depict the following:
- Figure 1:: A Screw in accordance with the invention, in a lateral view;
- Figure 2:: A screw in accordance with the invention in the rotated-in condition, in a cross-section; and
- Figure 3:: An opposing part in a view from above.

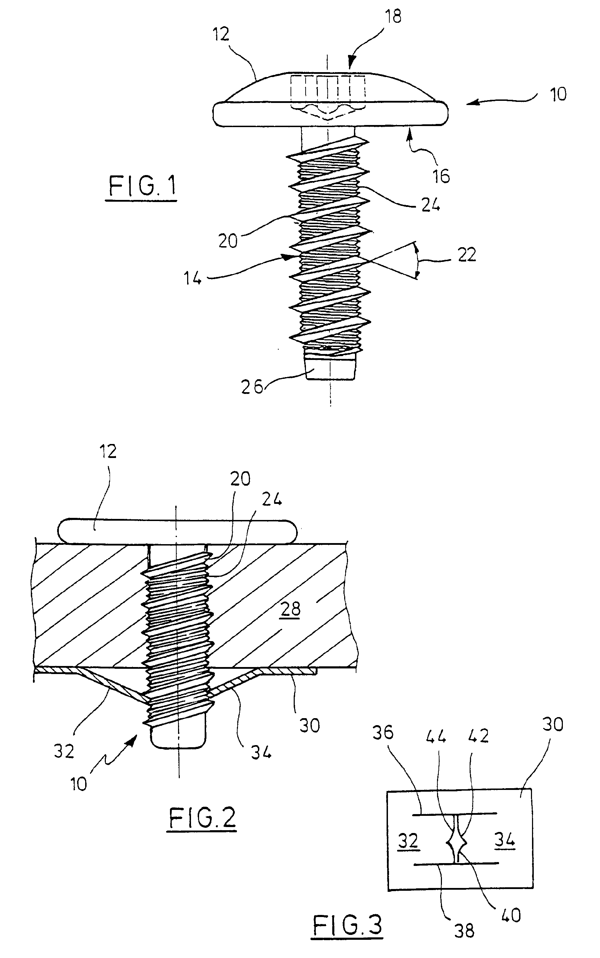

Figure 1 depicts a screw 10 in accordance with the invention with a screw head 12 and a screw shaft 14. The screw head 12 has a level application surface 16 for application to a work piece. A recess 18 for the tightening of the screw is provided in the screw head 12.

The shaft 14 is provided with a first threading 20. The threading 20 is constructed as an angular screw thread with an angle of the screw thread 22 of 45°. A second threading 24, which is positioned essentially along the entire shaft, is provided on the base of the first threading. The second threading is likewise constructed as an angular screw thread, and has an angle of the screw thread of 60°.

Several spirals of the second threading are provided in the base of the threading between two adjacent spirals of the first threading. In the example of implementation from Figure 1, the second threading 24 has an orientation which is opposite to that of the first threading 20. The external diameter of the first threading tapers down to the one end of the shaft of the screw. The end 26 of the screw shaft also has a diameter tapering down to the end. The dimensions of the examples of implementation of the screw that are reproduced in the following table have proven to be particularly advantageous:

| External Ø D | Body Ø d | Gradient RH | Gradient LH |
|---|---|---|---|
| 4.20 - 0.20 | 75% of D = 3.15-0.20 | 50% of d = 1.57 | 10% of min. D = 0.40 |
| 5.20 - 0.20 | 75% of D = 3.90-0.20 | 50% of d = 1.85 | 10% of min. D = 0.50 |
| 6.30 - 0.20 | 75% of D = 4.73-0.20 | 50% of d = 2,.35 | 10% of min. D = 0.60 |
| 7.20 - 0.20 | 75% of D = 5.40-0.25 | 50% of d = 2.70 | 10% of min. D = 0.70 |

Figure 2 depicts a cross-section of a screw 10 in accordance with the invention in the fastened condition. The screw 10 has been screwed through a material 28. The first threading 20 has thereby formed the spiral of a threading in the material 28. An opposing part 30 is provided on the side of the work piece 28 positioned opposite the head of the screw 12. The opposing part 30 is configured as a so-called sheet metal nut. The opposing part 30 that is depicted has, in its cross-section, two tongue units 32 and 34 which abut against the shaft of the screw. If the screw 10 is applied with its screw head 12 applied against the work piece 28, and if the screw is rotated further in its direction of rotation, then both of the projecting tongue units 34 and 32 are drawn to the shaft of the screw and grip there with the second threading 24.

Figure 3 depicts a schematic view of an opposing part 30. The opposing part has two slots 36, 38 positioned in parallel, with a connecting slot 40 proceeding perpendicularly to the same. The two tongue units 32 and 34 are formed by the three cuts in the opposing part 30. A recess 42, 44, which has essentially the shape of a triangle, as depicted in Figure 3, is provided centrally in each of the tongue units. The recesses 42 and 44 make possible a better engagement of the tongue units 32 and 34 with the second threading, and thereby a better gripping.

The screw is produced by means of a corresponding threading rolling die. For this purpose, conventional threading rolling machines can be used to roll on the threading.

## Claims

1. A screw (10) comprising a screw head (12) and a screw shank (14) provided with a first screw thread (20) having a thread root and a major diameter, said first screw thread being adapted for forming a thread, in particular into plastics, soft metals and the like, **characterized in that** the screw shank is provided with a second thread (24) having a major diameter, said second thread (24) extends along at least one axial portion of said screw shank in said thread root of said first thread, and that said major diameter of said second screw thread is smaller than said major diameter of said first screw thread.

2. A screw according to claim 1, **characterized in that** said first screw thread is provided with an included angle of 25° to 65°, preferably 30° to 60°.

3. A screw according to claims 1 or 2, **characterized in that** the ratio of the root diameter to said major diameter of said first screw thread is essentially 3:4.

4. A screw according to one of the claims 1 to 3, **characterized in that** the ratio of the lead of said first screw thread to said root diameter of said first screw thread is essentially 1:2.

5. A screw according to one of the claims 1 to 4, **characterized in that** a plurality of threads of said second screw thread is provided between two adjacent threads of said first screw thread.

6. A screw according to claim 5, **characterized in that** the ratio of said lead of said second screw thread to said major diameter of said first screw thread is 1:10, preferably with the value of said major diameter being rounded off.

7. A screw according to one of the claims 1 to 6, **characterized in that** said first screw thread is formed as a right-hand thread and said second screw thread is provided as a left-hand thread or a right-hand thread.

8. A screw according to one of the claims 1 to 6, **characterized in that** said first screw thread is formed as a left-hand thread and said second screw thread is formed as a right-hand thread or a left-hand thread.

9. A fastening device comprising a screw according to one of the claims 1 to 8 and a counter piece (30) provided with an opening for said screw, said counter element being flexible in the axial direction of said screw.

10. A fastening device according to claim 9, **characterized in that** the counter element is provided with a flexible tongue (32, 34), wherein the free end of said tongue comes into contact with said screw if said screw extends through said opening.

11. A fastening device according to claim 9 or 10, **characterized in that** the counter element is provided with two opposing tongues.

12. A fastening device according to claim 11, **characterized in that** each free end of said tongue is provided with a groove (42, 44).

13. A fastening device according to claim 9, **characterized in that** said counter element is provided with a cap-shaped indentation in the area of said opening.

14. A fastening device according to claim 13, **characterized in that** said indentation is divided into single segments with the help of radial cuts.

15. A fastening device according to one of the claims 9 to 14, **characterized in that** said counter element is made from sheet metal.
